# EUROPEAN PATENT SPECIFICATION

(11) **EP 1 322 495 B1**
(45) Date of publication and mention of the grant of the patent: **29.03.2006**
(21) Application number: 01965812.9
(22) Date of filing: 14.09.2001
(51) Int. Cl.: B60R 13/00, G09F 7/18

(54) **AN ELEMENT WITH AN EMBELLISHMENT AND A METHOD OF ASSEMBLING AN ELEMENT WITH AN EMBELLISHMENT**
TEIL MIT EINER VERZIERUNG UND VERFAHREN ZUM ZUSAMMENBAU EINES TEILS UND EINER VERZIERUNG
ELEMENT DOTE D'UN ENJOLIVEUR ET PROCEDE D'ASSEMBLAGE D'UN ELEMENT DOTE D'UN ENJOLIVEUR

(30) Priority: 14.09.2000 GB 0022577
(43) Date of publication of application: 02.07.2003
(73) Proprietor: AUTOLIV DEVELOPMENT AKTIEBOLAG, 447 83 Vargarda (SE)
(72) Inventor: FAYET, Sigisbert, FR-86170 Charrais, (FR)
(74) Representative: Frankland, Nigel Howard
(86) International application number: PCT/SE2001/001965
(87) International publication number: WO 2002/022400

(56) References cited:
- WO-A2-00/00369
- US-A- 5 294 147
- US-A- 5 685 056
- US-A- 6 099 027

## Description

**THE PRESENT INVENTION** relates to an element with an embellishment and also relates to a method of assembling an element with an embellishment.

It is often necessary to provide an element, such as part of a dashboard or a steering wheel cover in a motor vehicle, with an embellishment in the form of a "logo" or trade mark identifying the manufacturer of the vehicle.

Typically such an embellishment comprises one or more components, which may be formed of metal or an appropriate plastics material, and the or each component is adhered or glued to part of the front surface of the dashboard or steering wheel cover. Typically the area where the component is adhered or glued in position is slightly recessed relative to the front surface of the dashboard or steering wheel cover. This means that the component of the logo must be extremely accurately positioned, if a pleasing overall appearance is to be achieved. Also the recess must be precisely dimensioned and precisely positioned to accommodate the component of the logo.

US 6 099 027 A shows an element with an embellishment wherein the elements is provided with a front face and a rear face, there being one aperture provided in the element constituting an opening between the front face and the rear face, there being provided an embellishment having a protrusion thereon, the protrusion being inserted into the aperture from the rear face, and a part of the protrusion is visible through the aperture, from in front of the front face.

The present invention seeks to provide an improved element with an embellishment and also seeks to provide an improved method of assembling with an embellishment.

According to this invention there is provided an element within a vehicle with an embellishment wherein the element is provided with a front face and a rear face, there being at least one aperture provided in the element constituting an opening between the front face and the rear face, the or each aperture being provided with a peripheral lip, extending substantially over the whole of the periphery of the aperture, the lip extending away from the front face, the lip being flexible so that the tip of the lip, spaced rearwardly from the front face, may move perpendicularly relative to the axis of the aperture, there being provided a member having at least one protrusion thereon received within the aperture, the protrusion being dimensioned and configured so that as the protrusion is inserted into the aperture from the rear face the lip will be located immediately adjacent the protrusion, and at least part of the protrusion is viable, through the aperture, from in front of the front face.

Preferably the or each protrusion carried by the said member is dimensioned and configured so that as it is introduced into the said aperture provided in the element the protrusion will engage the lip and move the tip of the lip away from the axis of the aperture.

Conveniently at least two apertures are formed in the element and at least two corresponding protrusions are provided on the said member.

Advantageously the or each lip totally surrounds the corresponding aperture.

Preferably a groove is provided in the member surrounding the or each protrusion, the groove being so located that when the member is mounted on the element the tip of the or each lip is received in the groove.

The invention also relates to a method of assembling an element with an embellishment as described above which has a lip comprising the steps of moving said member towards said element with the or each protrusion on the member aligned with the corresponding aperture formed in the element and, as the or each protrusion is inserted into the aperture, deflecting the lip which substantially surrounds the aperture so that the lip is biased into contact with the side walls of the protrusion.

In order that the invention may be more readily understood, and so that further features thereof may be appreciated, the invention will now be described by way of example, with reference to the accompanying drawings in which
FIGURE 1 is a front view of part of the steering wheel cover which is provided with an embellishment in the form of a "logo",
FIGURE 2 is an underneath view of the part of the cover shown in Figure 1, with the embellishment removed,
FIGURE 3 is a partial sectional view taken on the line III-III of Figure 1 with the embellishment removed,
FIGURE 4 is a perspective view of a member carrying the embellishment,
FIGURE 5 is a section view of the member of Figure 4 taken on the line VV,
FIGURE 6 is a diagrammatic sectional view showing part of the cover and part of the member carrying the embellishment in the first relative position,
FIGURE 7 is a view corresponding to Figure 6 showing the part of the cover and the member carrying the embellishment in a further relative position, and
FIGURE 8 is a view corresponding to Figures 6 and 7 showing the cover and the member carrying the embellishment in a final relative position.

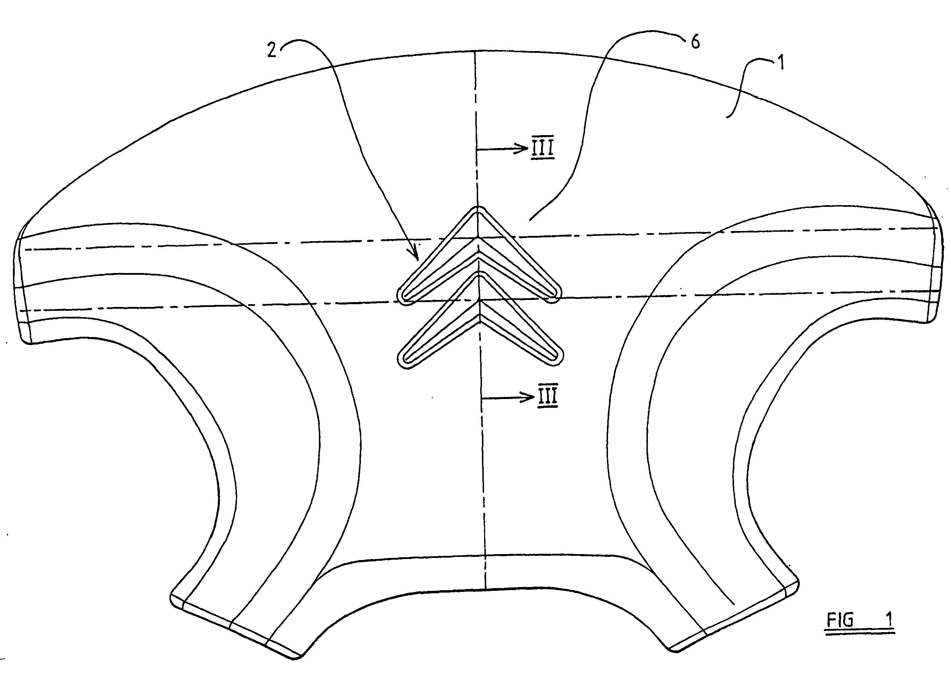

Referring initially to Figure 1 of the accompanying drawings an element is illustrated in the form of a cover 1, moulded of an appropriate plastics material, the cover 1 being the cover of an airbag housing mounted within the hub of a steering wheel of a motor vehicle. The cover 1 is provided with a logo 2 provided at a central region of the cover, the logo, in this case, comprising two "chevrons".

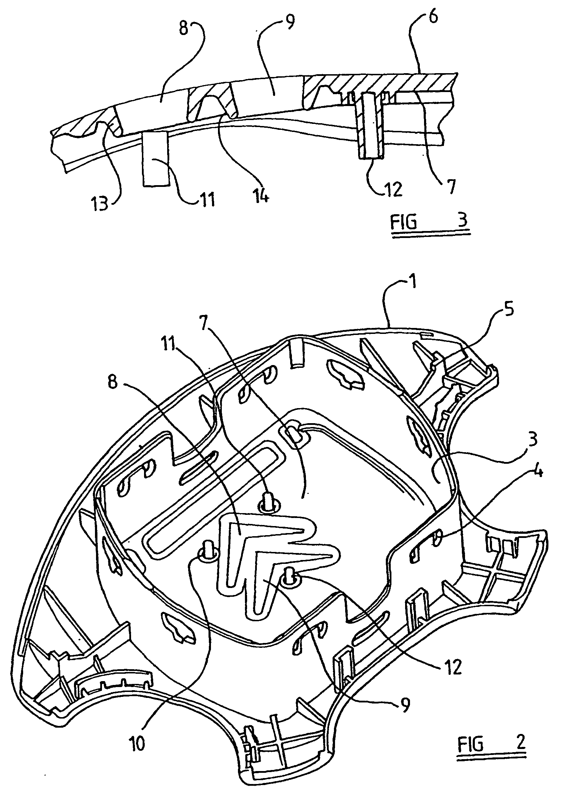

The under-surface of the cover 1, as can be seen from Figure 2, is provided with a depending wall 3 having apertures 4 therein adapted to co-operate with fixing elements provided on the airbag housing, to enable the cover to be mounted in position. The under-surface of the cover is also provided with various depending reinforcing ribs 5.

The cover 1 has a region which surrounds the logo 2 where the cover is of a generally plate-like form having an upper surface 6, as shown in Figure 1 and a rear surface 7 shown in Figure 2. Two chevron shaped apertures 8, 9 are formed in this region of the cover and, adjacent to the apertures, three fixing pegs 12 are provided on the rear surface 7. Each aperture defines an axis perpendicular to the plane of the surfaces 6 and 7.

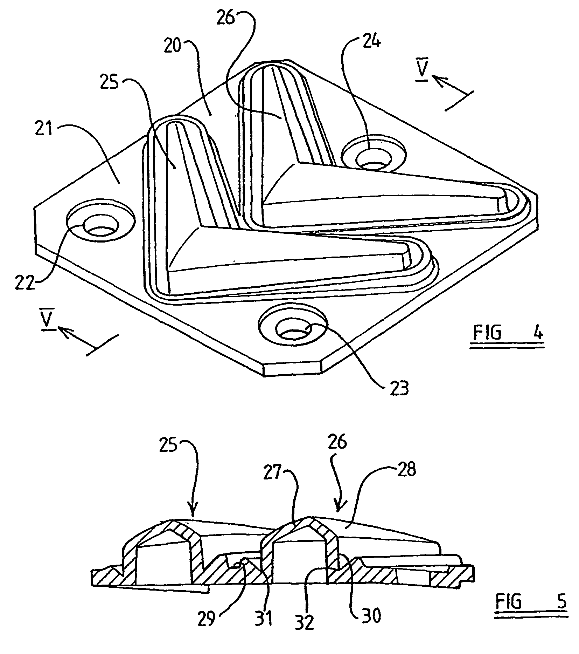

As can be seen from Figure 3, the periphery of each aperture 8, 9 is defined by a lip 13, 14 which extends rearwardly from the front face 6. The lip, 13, 14 totally surrounds the respective aperture 8, 9. Each lip 13, 14 is of tapering form. Thus each lip has a relatively thick base portion which is located adjacent to the upper surface 6 of the cover 1 and a relatively small tip which is located at a position spaced away from the upper surface 6 of the cover 1.

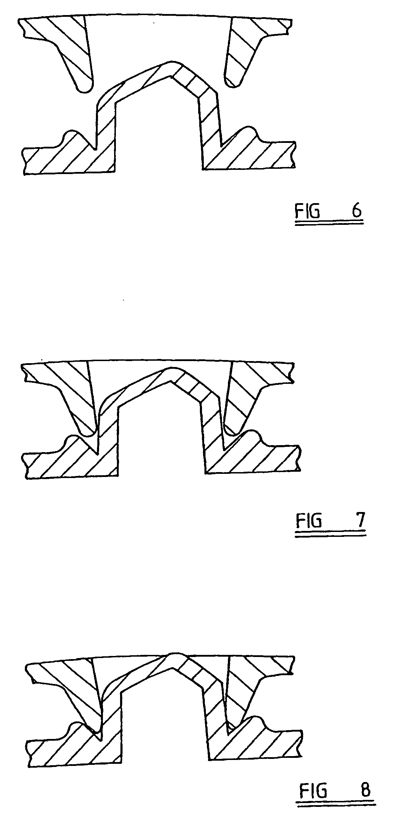

Referring now to Figures 4 and 5 a member 20 is illustrated which may be formed of metal or of plastic, but which ideally has a colour or appearance which is different to the colour or appearance of the cover 1. The member 20 comprises a generally planar plate 21 provided with three spaced apart apertures 22, 23, 24 which are located to co-operate with the mounting pegs 10, 11, 12 provided on the cover 1. The plate 21 carries two upwardly directed protrusions 25, 26 each of "chevron" shape and each being dimensioned to extend at least partially through a respective aperture 8 or 9 of the cover 1 as shown in Figures 1-3.

As can be seen from Figure 5 each protrusion 25, 26 has an upper region formed from two inwardly inclined faces 27, 28 supported on two side walls 29, 30, the side walls converging slightly towards each other. Adjacent to the base of each side wall 29, 30 is provided a channel or groove 31, 32. The converging side walls are such that the width of the upper region is less than the width of the corresponding part of the apertures 8 and 9 so that the upper region may be readily inserted into the aperture. The member 20 is in the form of a planar plate and thus has dimensions greater than the corresponding dimensions of the aperture so that parts of the member 20 will engage the cover 1 to prevent the member 20 passing completely through the aperture in the cover 1.

It is to be appreciated that the cover 1 and the member 20 are fabricated separately and are then assembled by mounting the member 20 on the cover 1. As the member 20 is mounted on the cover 1 the apertures 22, 23, 24 in the plate 21 are aligned with the mounting pegs 10, 11, 12 on the rear surface of the cover 1 and the protrusions 25, 26 are co-aligned with the apertures 8 and 9. The cover 1 and the member 20 thus have the relative positions as shown in Figure 6.

The member 20 and the cover 1 are then moved towards each other so that the mounting pegs 10, 11, 12 become inserted into the apertures 22, 23, 24 and the protrusions 25, 26 are moved towards the apertures 8 and 9. The inclined faces 27, 28 of each protrusion pass into the appropriate aperture and the lips, such as the lips 13, 14 engage the inclined side walls 29, 30 of each protrusion. This is the situation illustrated in Figure 7.

Finally the member 20 is moved further towards the cover 1. The lips 13, 14 flex outwardly way from the axis of the respective aperture so that each lip is biased firmly into contact with the inclined side wall of the relevant protrusion 25 or 26. When the member 20 is in its final position the tip of each lip is accommodated within the relevant groove, such as groove 31 or 32, provided at the base of the side wall of the relevant protrusion 25 or 26. This helps ensure that the lip is retained in the desired final position. If the lip is, for any reason, initially flexed outwardly, relative to the axis of the aperture, the tip of the lip will engage the wall of the groove 31, 32, and will then flex inwardly to the desired final position as the member is moved to its final position.

While, in the described embodiment, each lip totally surrounds the relevant aperture, in a modified embodiment each lip may be formed of two or more lips sections. Thus there may be a break in the lip, for example at the region of the aperture that forms a sharp apex.

In the present Specification "comprise" means "includes or consists of" and "comprising" means "including or consisting of".

## Claims

1. An element (1) within a vehycle with an embellishment (20) wherein the element (1) is provided with a front face (6) and a rear face (7), there being at least one perture (8, 9) provided in the element constituting an opening between the front face (6) and the rear face (7), the or each aperture (8, 9) being provided with a peripheral lip (13, 14), extending substantially over the whole of the periphery of the aperture (8, 9), the lip (13, 14), extending away from the front face (6) the lip (13,14) being flexible so that the tip of the lip (13, 14), spaced rearwardly from the front face(6), may move perpendicularly relative to the axis of the aperture (8,9), said embellishment being provided by a member (20) at least one protrusion (25, 26) thereon, the protrusion (25,26) being received within the aperture (8,9), the protrusion (25, 26) being dimensioned and configured so that as the protusion (25, 26) is inserted into the aperture (8, 9) from the rear face (7) the lip (13,14) will be located immediately adjacent the protrusion (25, 26), and at least part of the protrusion (25, 26) is visible, through the aperture (8, 9), from in front of the front face (6)

2. An element (1) according to Claim 1 wherein the or each protrusion (25, 26) carried by the said member is dimensioned and configured so that as it is introduced into the said aperture (8, 9) provided in the element (1) the protrusion (25, 26) will engage the lip (13, 14) and move the tip of the lip (13 14) away from the axis of the aperture (8, 9).

3. An element according to Claim 1 or Claim 2 wherein at least two apertures (8, 9) are formed in the element (1) and at least two corresponding protrusions (25, 26) are provided on the said member (20).

4. An element according to any one of the preceding Claims wherein the or each lip (13,14) totally surrounds the corresponding aperture (8, 9).

5. An element (1) according to any one of the preceding Claims wherein a groove (31, 32) is provided in the member (20) surrounding the or each protrusion (25, 26), the groove (31, 32) being so located that when the member (20) is mounted on the element (1) the tip of the or each lip (13, 14) is received in the groove (34, 32).

6. A method of assembling an element (1) with an embellishment (20) according to any one of Claims 1 to 5, comprising the steps of moving said member (20) towards said element (1) with the or each protrusion (25, 26) on the member aligned with the corresponding aperture (8, 9) formed in the element (1) and; as the or each protrusion (25, 26) is inserted into the aperture (8,9) deflecting the lip (13,14) which substantially surrounds the aperture (8, 9) so that the lip (13, 14) is biased into contact with the side walls of the protrusion (25, 26).

## Revendications

1. Un élément (1) dans un véhicule, avec un enjoliveur (20), dans lequel l'élément (1) est muni d'une face avant (6) et d'une face arrière (7), au moins une ouverture (8, 9) étant prévue dans l'élément, formant une ouverture entre la face avant (6) et la face arrière (7), la ou chaque ouverture (8, 9) étant munie d'une lèvre (13, 14) périphérique s'étendant sensiblement sur la totalité de la périphérie de l'ouverture (8, 9), la lèvre (13, 14) s'étendant à distance de la face avant (6), la lèvre (13, 14) étant flexible, de manière que le bout de lèvre (13 ,14.), espacé à l'arrière vis-à-vis de la face avant (6), puisse se déplacer perpendiculairement par rapport à l'axe de l'ouverture (8, 9), ledit enjoliveur étant muni d'un organe (20) comprenant sur lui au moins une saillie (25, 26), la saillie (25, 26) étant logée dans l'ouverture (8, 9), la saillie (25, 26) étant dimensionnée et configurée de manière que, lorsque la saillie (25, 26) est insérée dans l'ouverture (8, 9) depuis la face arrière (7), la lèvre (13, 14) soit placée immédiatement au voisinage de la saillie (25, 26), et au moins une partie de la saillie (25, 26) est visible, à travers l'ouverture (8, 9), depuis l'avant de la face avant (6).

2. Un élément (1) selon la Revendication 1, dans lequel la ou chaque saillie (25, 26) portée par ledit organe est dimensionnée et configurée de manière que, lorsqu'il est introduit dans ladite ouverture (8, 9) ménagée dans l'élément (1), la saillie (25, 26) vienne en prise avec la lèvre (13, 14) et écarte le bout de la lèvre (13, 14) de l'axe de l'ouverture (8, 9).

3. Un élément selon la Revendication 1 ou la Revendication 2, dans lequel au moins deux ouvertures (8, 9) sont formées dans l'élément (1) et au moins deux saillies (25, 26) correspondantes sont prévues sur ledit organe (20).

4. Un élément selon l'une quelconque des Revendications précédentes, dans lequel la ou chaque lèvre (13, 14) entoure totalement l'ouverture (8, 9) correspondante.

5. Un élément (1) selon l'une quelconque des Revendications précédentes, dans lequel une gorge (31, 32) est prévue dans l'organe (20) entourant la ou chaque saillie (25; 26), la gorge (31, 32) étant placée de manière que, lorsque l'organe (20) est monté sur l'élément (1), le bout de la ou de chaque lèvre (13, 14) soit logé dans la gorge (31, 32).

6. Procédé d'assemblage d'un élément (1) avec un enjoliveur (20) selon l'une quelconque des Revendications 1 à 5, comprenant les étapes de déplacement dudit organe (20) vers ledit élément (1), la ou chaque saillie (25, 26) de l'organe étant alignée avec l'ouverture (8, 9) correspondante ménagée dans l'élément (1) et, lorsque la ou chaque saillie (25, 26) est insérée dans l'ouverture (8, 9), en provoquant le fléchissement de la lèvre (13, 14) qui entoure pratiquement l'ouverture (8, 9), de manière que la lèvre (13, 14) soit mise en contact avec les parois latérale de la saillie (25, 26).

## Patentansprüche

1. Element (I) innerhalb eines Fahrzeugs mit einer Verzierung (20), wobei das Element (1) mit einer vorderen Fläche (6) und einer hinteren Fläche (7) versehen ist, wobei zumindest eine Durchbrechung (8, 9) in dem Element vorgesehen ist, die eine Öffnung zwischen der vorderen Fläche (6) und der hinteren Fläche (7) bildet, wobei die oder jede Durchbrechung (8, 9) mit einem entlang des Umfangs verlaufenden, davon abgehenden Rand (13, 14) versehen ist, der sich im wesentlichen über den gesamten Umfang der Durchbrechung (8, 9) erstreckt, wobei sich der Rand (13, 14) von der vorderen Fläche (6) weg erstreckt, wobei der Rand (13, 14) flexibel ist, so daß sich die Spitze des Rands (13, 14), die nach hinten einen Abstand von der vorderen Fläche (6) aufweist, sich in senkrechter Richtung relativ zu der Achse der Durchbrechung (8, 9) bewegen kann, wobei die genannte Verzierung durch ein Teil (20) gebildet ist, das zumindest einen Vorsprung (25, 26) darauf aufweist, wobei der Vorsprung (25, 26) innerhalb der Durchbrechung (8, 9) aufgenommen ist, wobei der Vorsprung (25, 26) so dimensioniert und konfiguriert ist, daß dann, wenn der Vorsprung (25, 26) in die Durchbrechung (8, 9) von der hinteren Fläche (7) her eingesetzt wird, der Rand (13, 14) unmittelbar benachbart zu dem Vorsprung (25, 26) positioniert ist, und daß zumindest ein Teil des Vorsprungs (25, 26) von einer Position vor der vorderen Fläche (6) aus durch die Durchbrechung (8, 9) sichtbar ist.

2. Element (1) nach Anspruch 1, **dadurch gekennzeichnet, daß** der oder jeder Vorsprung (25, 26), der von dem genannten Teil getragen ist, so dimensioniert und konfiguriert ist, daß dann, wenn er in die genannte Durchbrechung (8, 9) die in dem Element (1) vorgesehen ist, eingesetzt wird, der Vorsprung (25, 26) mit dem Rand (13, 14) zusammenwirkt und die Spitze des Rands (13, 14) von der Achse der Durchbrechung (8, 9) wegbewegt.

3. Element nach Anspruch 1 oder Anspruch 2, **dadurch gekennzeichnet, daß** zumindest zwei Durchbrechungen (8, 9) in dem Element (1) ausgebildet sind, und daß zumindest zwei entsprechende Vorsprünge (25, 26) auf dem Teil (20) vorgesehen sind.

4. Element nach einem der vorangehenden Ansprüche, **dadurch gekennzeichnet, daß** der oder jeder Rand (13, 14) die entsprechende Durchbrechung (8, 9) vollständig umgibt.

5. Element (1) nach einem der vorangehenden Ansprüche, **dadurch gekennzeichnet, daß** eine Nut (31, 32) in dem Teil (20), das den oder jeden Vorsprung (25, 26) umgibt, ausgebildet ist, wobei die Nut (31, 32) so positioniert ist, daß dann, wenn das Teil (20) auf dem Element (1) angebracht ist, die Spitze von dem oder jedem Rand (13, 14) in der Nut (30, 32) aufgenommen ist.

6. Verfahren zum Zusammensetzen eines Elements (1) mit einer Verzierung (20) nach einem der Ansprüche 1 bis 5, mit den Schritten, das Teil (20) in Richtung auf das Element (1) zu bewegen, wobei der oder jeder Vorsprung (25, 26) auf dem Teil (20) mit der entsprechenden Durchbrechung (8, 9), die in dem Element (1) ausgebildet ist, ausgerichtet ist, und wenn der oder jeder Vorsprung (25, 26) in die Durchbrechung (8, 9) eingesetzt wird, Umbiegen des Rands (13, 14), der die Durchbrechung (8, 9) im wesentlichen umgibt, so daß der Rand (13, 14) in Kontakt mit den seitlichen Wänden des Vorsprungs (25, 26) vorgespannt wird.
